# FASCICULE DE BREVET EUROPEEN

(11) **EP 3 160 900 B1**
(45) Date de publication et mention de la délivrance du brevet: **25.03.2026**
(21) Numéro de dépôt: 15753713.5
(22) Date de dépôt: 26.06.2015
(51) Int. Cl.: C01B 15/013

(54) **PROCEDE DE PURIFICATION DE PEROXYDE D'HYDROGENE ET SOLUTION DE PEROXYDE D'HYDROGENE**
REINIGUNGSVERFAHREN FÜR WASSERSTOFFPEROXID UND WASSERSTOFFPEROXIDLÖSUNG
HYDROGEN PEROXIDE PURIFICATION PROCESS AND HYRODGEN PEROXIDE SOLUTION

(30) Priorité: 30.06.2014 FR 1456165
(43) Date de publication de la demande: 03.05.2017
(73) Titulaire: Arkema France, 92800 Puteaux (FR)
(72) Inventeur: ZYDOWICZ, Philippe, F-69800 Saint Priest (FR); REQUIEME, Benoît, F-38450 Saint-Georges-de-Commiers (FR); JAUFFRET, Michel, F-38220 Montchaboud (FR)
(74) Mandataire: Arkema Patent
(86) Numéro de dépôt international: PCT/FR2015/051732
(87) Numéro de publication internationale: WO 2016/001539

(56) Documents cités:
- WO-A1-2005/033005
- JP-A- 2003 001 070
- JP-A- 2004 089 962
- JP-A- 2012 188 318
- US-A- 4 879 043
- US-B2- 6 333 018

## Description

### DOMAINE DE L'INVENTION

La présente invention concerne un procédé de purification de peroxyde d'hydrogène et une solution de peroxyde d'hydrogène.

### ARRIERE-PLAN TECHNIQUE

Le peroxyde d'hydrogène est un produit utilisé dans diverses applications industrielles, notamment en électronique et dans l'agroalimentaire.

Les procédés existants de production de peroxyde d'hydrogène conduisent à la présence dans le produit d'impuretés ou de contaminants minéraux ou organiques à faible concentration. En outre, du fait du caractère corrosif du peroxyde d'hydrogène vis-à-vis de nombre de matériaux métalliques, le transport ou le stockage du peroxyde d'hydrogène peut s'accompagner d'un enrichissement en contaminants tels que Fe, Cu, Mn ou Cr.

De manière générale, les contaminants présents dans une solution de peroxyde d'hydrogène peuvent être des catalyseurs de la décomposition du peroxyde d'hydrogène.

Il est connu d'utiliser des stabilisants afin de limiter la décomposition du peroxyde d'hydrogène. Il est également connu de purifier le peroxyde d'hydrogène afin de réduire la teneur en contaminants, par exemple par distillation ou filtration sur résines ou sur membranes.

Ainsi, le document US 4,879,043 décrit l'utilisation de l'osmose inverse pour purifier un flux de peroxyde d'hydrogène ayant un titre de 5 à 50 % en masse.

Le document US 6,333,018 décrit l'utilisation de l'osmose inverse pour purifier un flux de peroxyde d'hydrogène ayant un titre de 60 à 70 % en masse, en l'absence de stabilisants.

Le document WO 2005/033005 décrit une purification de peroxyde d'hydrogène en au moins deux étapes, par exemple une étape d'osmose inverse puis une étape de mise en contact avec une résine d'adsorption.

Les documents JP2004089962 et JP2003001070 montrent un procédé de purification de peroxyde h'hydrogène par une étape d'osmose inverse.

En réalité, les spécifications souhaitées pour le peroxyde d'hydrogène varient selon les applications industrielles. Ainsi, pour les applications réglementées, dans la cosmétique, la pharmacie ou l'agroalimentaire, une pureté très élevée est nécessaire. En revanche, pour les applications de grande diffusion (en chimie, ou encore dans la production de pâte à papier), le peroxyde d'hydrogène produit présente communément une quantité de contaminants largement supérieure.

Il existe toutefois un besoin pour un grade intermédiaire, par exemple dans le domaine de la production de peracides, notamment d'acide peracétique.

En d'autres termes, on souhaite améliorer dans une certaine mesure la pureté du peroxyde d'hydrogène du type utilisé pour les applications de grande diffusion, avec un coût de revient relativement faible et en utilisant un procédé simple, sans mettre en œuvre les techniques complexes en usage pour les applications réglementées.

### RESUME DE L'INVENTION

L'invention concerne un procédé de purification de peroxyde d'hydrogène, comprenant :
- la fourniture d'un flux de départ contenant du peroxyde d'hydrogène à une teneur supérieure à 50 % en masse, ainsi qu'au moins un stabilisant ;
- une étape unique de purification du flux de départ, ladite étape unique consistant en une purification par osmose inverse ;
- la collecte d'un flux purifié à l'issue de ladite étape unique de purification,
dans lequel la purification par osmose inverse comprend :
- le passage du flux de départ sur une première membrane ;
- la collecte d'un perméat et d'un rétentat issus de la première membrane ;
- le passage du perméat issu de la première membrane sur une deuxième membrane ;
la collecte d'un perméat et d'un rétentat issus de la deuxième membrane, le flux purifié étant constitué par le perméat issu de la deuxième membrane.

Selon un mode de réalisation, le flux de départ est préparé par un procédé comprenant un passage sur résine d'adsorption.

Selon un mode de réalisation, le flux de départ contient au moins 55 % en masse, de préférence au moins 60 % en masse, de peroxyde d'hydrogène.

Selon un mode de réalisation, le stabilisant est choisi parmi les sels de phosphate ou de pyrophosphate, les sels d'étain, les composés organophosphorés et notamment les phosphonates, les acides carboxyliques, les borates, les nitrates et les combinaisons de ceux-ci, le stabilisant étant de préférence un mélange de pyrophosphate de sodium et de stannate de sodium.

Selon un mode de réalisation, la purification par osmose inverse comprend :
- le passage du flux de départ sur une membrane unique ;
- la collecte d'un perméat et d'un rétentat issus de la membrane, le flux purifié étant constitué par le perméat.

Selon un mode de réalisation, la purification par osmose inverse comprend :
- le passage du flux de départ sur une première membrane ;
- la collecte d'un perméat et d'un rétentat issus de la première membrane ;
- le passage du perméat issu de la première membrane sur une deuxième membrane ;
- la collecte d'un perméat et d'un rétentat issus de la deuxième membrane, le flux purifié étant constitué par le perméat issu de la deuxième membrane.

Selon un mode de réalisation, la purification par osmose inverse est effectuée sur une membrane de type polyamide, polypipérazine, polyacrylonitrile ou polysulfone, et de préférence sur une membrane polyamide sur un support polysulfone.

Selon un mode de réalisation, le flux purifié contient :
- moins de 100 mg/kg de carbone organique total ;
- moins de 5 mg/kg de phosphore ;
- moins de 0,04 mg/kg de fer ; et
- moins de 0,1 mg/kg de la somme de chrome et de nickel.

Selon un mode de réalisation, la purification du flux de départ met en œuvre une ou plusieurs membranes, lesdites membranes étant utilisées pendant une durée supérieure ou égale à 1 semaine, de préférence supérieure ou égale à 2 semaines, ou supérieure ou égale à 3 semaines, ou supérieure ou égale à 4 semaines.

Une solution contenant plus de 50 % en masse de peroxyde d'hydrogène, contenant également au moins un stabilisant, et contenant :
- moins de 100 mg/kg de carbone organique total ;
- moins de 5 mg/kg de phosphore ;
- moins de 0,04 mg/kg de fer ; et
- moins de 0,1 mg/kg de la somme de chrome et de nickel, est décrite.

La solution contient au moins 55 % en masse, de préférence au moins 60 % en masse, de peroxyde d'hydrogène.

Selon un mode de réalisation, le stabilisant est choisi parmi les sels de phosphate ou de pyrophosphate, les sels d'étain, les composés organophosphorés et notamment les phosphonates, les acides carboxyliques, les borates, les nitrates et les combinaisons de ceux-ci, le stabilisant étant de préférence un mélange de pyrophosphate de sodium et de stannate de sodium.

Selon un mode de réalisation, la teneur en stabilisant est comprise entre 5 et 50 mg par kg de solution.

La présente invention permet de surmonter les inconvénients de l'état de la technique. Elle permet plus particulièrement de produire du peroxyde d'hydrogène présentant des spécifications intermédiaires entre celles des applications de grande diffusion et celles des applications réglementées, et ce à faible coût de revient et avec un procédé relativement simple.

### DESCRIPTION DE MODES DE REALISATION DE L'INVENTION

L'invention est maintenant décrite plus en détail et de façon non limitative dans la description qui suit.

Sauf mention contraire, l'ensemble des concentrations ou teneurs mentionnées sont des valeurs massiques.

L'invention prévoit la fourniture d'un flux de départ contenant du peroxyde d'hydrogène à une teneur supérieure à 50 % en masse. Ce flux de départ est de préférence directement issu d'une unité de production de peroxyde d'hydrogène, et n'a pas subi de purification préalable autre qu'éventuellement un passage sur résine d'adsorption au cours de sa production. Il s'agit d'une solution aqueuse de peroxyde d'hydrogène.

L'invention s'applique avantageusement à des flux de départ contenant au moins 52 %, au moins 55 %, au moins 58 %, au moins 60 %, au moins 62 % ou au moins 65 % de peroxyde d'hydrogène.

Le flux de départ contient au moins un stabilisant. Ce stabilisant est généralement ajouté directement en sortie de l'unité de production. La teneur en stabilisant varie de 1 à 400 mg/kg, de préférence de 5 à 300 mg/kg.

A titre de stabilisant, on peut utiliser par exemple des sels de phosphate ou de pyrophosphate, des sels d'étain, des composés organophosphorés et notamment des phosphonates, des acides carboxyliques, des borates, des nitrates ou des combinaisons de ceux-ci. Le stabilisant préféré est un mélange de pyrophosphate de sodium et de stannate de sodium contenant 1 à 150 mg de chaque stabilisant par kg de produit, de préférence de 15 à 100 mg de chaque stabilisant par kg de produit, de préférence de 20 à 110 mg de chaque stabilisant par kg de produit, de préférence de 25 à 120 mg de chaque stabilisant par kg de produit.

L'invention prévoit une étape unique de purification du flux de départ, qui est une étape de purification par osmose inverse. Ainsi, l'invention exclut la présence d'étapes de purification par une autre technique, telles que des étapes de distillation, d'échange d'ions, d'exposition à l'ozone ou au rayonnement ultraviolet, d'ultrafiltration ou nanofiltration, etc.

L'étape de purification par osmose inverse peut comprendre un passage unique sur une membrane d'osmose inverse, ou bien une succession de plusieurs passages sur des membranes d'osmose inverse, notamment une succession de deux ou trois passages sur des membranes d'osmose inverse.

La succession de plusieurs passages sur des membranes d'osmose inverse peut être mise en œuvre en disposant des unités d'osmose inverse en série. Bien entendu, il est également possible de disposer des unités d'osmose inverse en parallèle en fonction du débit souhaité.

Les membranes d'osmose inverse utilisées dans le cadre de l'invention sont des membranes semi-perméables de type polyamide, polypipérazine, polyacrylonitrile ou polysulfone, et de préférence sont des membranes polyamides sur support polysulfone.

Chaque étape de passage sur une membrane d'osmose inverse permet de collecter un perméat et un rétentat, le perméat étant la fraction appauvrie en contaminants. Le passage sur la membrane est forcé par application d'une pression adéquate.

Le rétentat, enrichi en contaminants, peut également être valorisé, par exemple sous la forme d'un peroxyde d'hydrogène répondant à des spécifications inférieures. Si l'on purifie une partie seulement du flux de départ, il est ainsi possible de mélanger le rétentat avec l'autre partie (non soumise à purification) du flux de départ.

Le flux de perméation peut être compris par exemple entre 10 et 200 L/h.m², de préférence entre 20 et 180 L/h.m², de préférence entre 50 et 150 L/h.m². La pression peut être comprise par exemple entre 10 et 80 bars, de préférence entre 15 et 70 bars, de préférence entre 25 et 40 bars. Le FCV (Facteur de Concentration Volumique calculé comme le rapport du débit d'alimentation au débit de rétentat) peut être compris par exemple entre 1 et 10, de préférence entre 1,2 et 8, de préférence entre 1,5 et 5, de préférence entre 2 et 4.

Un problème posé par la purification par osmose inverse de flux de peroxyde d'hydrogène est que le peroxyde d'hydrogène a tendance à attaquer chimiquement les membranes, surtout lorsqu'il est présent à une concentration élevée. Ainsi, le document US 4,879,043 enseigne l'utilisation de l'osmose inverse uniquement pour des flux contenant moins de 50 % de peroxyde d'hydrogène.

Les présents inventeurs ont constaté que la durée de vie de certaines membranes en présence d'un flux contenant plus de 50 % de peroxyde d'hydrogène ne dépassait pas quelques heures ou jours. En revanche, certaines membranes présentent une résistance accrue au peroxyde d'hydrogène et peuvent être utilisées en continu pendant une durée d'au moins 1, 2, 3 voire 4 semaines.

### EXEMPLES

L'exemple suivant illustre l'invention sans la limiter.

Dans cet exemple, on compare la teneur en différents contaminants dans une solution S contenant 60 % de peroxyde d'hydrogène stabilisée par 110 mg de pyrophosphate de sodium et 30 mg de stannate de sodium (exprimé en Na₂SnO₃, 3 H₂O) par kg de solution, avant et après purification par osmose inverse (en une seule étape ou en deux étapes, notation « OI ») en utilisant une membrane d'osmose inverse KOCH TFC-XR, dans les conditions opératoires suivantes : pression : 35 bars, température : 22°C, FCV : 2,5, flux de perméation : 70 L/h.m². La solution S de départ testée présente des spécifications typiques d'un peroxyde d'hydrogène de grande diffusion. La solution S a été préparée par un procédé comprenant un passage sur résine d'adsorption.

Des spécifications communément utilisées pour la production d'acide peracétique sont également indiquées. Les résultats figurent dans le tableau ci-dessous (« COT » signifie : carbone organique total).

Les teneurs en métaux ont été déterminées selon les méthodes décrites dans les normes NF EN ISO 17294-2 et NF EN ISO 11885 ; la teneur en COT a été déterminée selon la méthode décrite dans la norme NF EN 1484.

| | S | S + 1 étape Ol | S + 2 étapes Ol | Exemple de spécifications |
|---|---|---|---|---|
| COT (mg/kg) | 240 | 100 | 40 | < 100 |
| P (mg/kg) | 45 | 9 | 2 | < 5 |
| Fe (mg/kg) | 0,3 | 0,05 | 0,03 | < 0,04 |
| Sn (mg/kg) | 13,5 | 0,7 | 0,03 | - |
| Cr + Ni (mg/kg) | 0,15 | < 0,1 | < 0,1 | < 0,1 |

## Revendications

1. Procédé de purification de peroxyde d'hydrogène, comprenant :
- la fourniture d'un flux de départ contenant du peroxyde d'hydrogène à une teneur supérieure à 50 % en masse, ainsi qu'au moins un stabilisant ;
- une étape unique de purification du flux de départ, ladite étape unique consistant en une purification par osmose inverse ;
- la collecte d'un flux purifié à l'issue de ladite étape unique de purification,
dans lequel la purification par osmose inverse comprend :
- le passage du flux de départ sur une première membrane ;
- la collecte d'un perméat et d'un rétentat issus de la première membrane ;
- le passage du perméat issu de la première membrane sur une deuxième membrane ;
la collecte d'un perméat et d'un rétentat issus de la deuxième membrane, le flux purifié étant constitué par le perméat issu de la deuxième membrane.

2. Procédé selon la revendication 1, dans lequel le flux de départ est préparé par un procédé comprenant un passage sur résine d'adsorption.

3. Procédé selon la revendication 1 ou 2, dans lequel le flux de départ contient au moins 55 % en masse, de préférence au moins 60 % en masse, de peroxyde d'hydrogène.

4. Procédé selon l'une des revendications 1 à 3, dans lequel le stabilisant est choisi parmi les sels de phosphate ou de pyrophosphate, les sels d'étain, les composés organophosphorés et notamment les phosphonates, les acides carboxyliques, les borates, les nitrates et les combinaisons de ceux-ci, le stabilisant étant de préférence un mélange de pyrophosphate de sodium et de stannate de sodium.

5. Procédé selon l'une des revendications 1 à 4, dans lequel la purification par osmose inverse comprend :
- le passage du flux de départ sur une membrane unique ;
- la collecte d'un perméat et d'un rétentat issus de la membrane, le flux purifié étant constitué par le perméat.

6. Procédé selon l'une des revendications 1 à 5, dans lequel la purification par osmose inverse est effectuée sur une membrane de type polyamide, polypipérazine, polyacrylonitrile ou polysulfone, et de préférence sur une membrane polyamide sur un support polysulfone.

7. Procédé selon l'une des revendications 1 à 6, dans lequel le flux purifié contient :
- moins de 100 mg/kg de carbone organique total ;
- moins de 5 mg/kg de phosphore ;
- moins de 0,04 mg/kg de fer ; et
- moins de 0,1 mg/kg de la somme de chrome et de nickel.

8. Procédé selon l'une des revendications 1 à 7, dans lequel la purification du flux de départ met en œuvre une ou plusieurs membranes, lesdites membranes étant utilisées pendant une durée supérieure ou égale à 1 semaine, de préférence supérieure ou égale à 2 semaines, ou supérieure ou égale à 3 semaines, ou supérieure ou égale à 4 semaines.

## Patentansprüche

1. Verfahren zur Reinigung von Wasserstoffperoxid, umfassend:
- das Bereitstellen eines Ausgangsstroms, der Wasserstoffperoxid mit einem Gehalt von mehr als 50 Massen-% sowie mindestens einen Stabilisator enthält;
- einen einzigen Schritt zur Reinigung des Ausgangsstroms, wobei der einzige Schritt in einer Reinigung durch Umkehrosmose besteht;
- Auffangen eines gereinigten Stroms nach dem einzigen Reinigungsschritt,
wobei die Reinigung durch Umkehrosmose umfasst:
- den Durchgang des Ausgangsstroms durch eine erste Membran;
- das Auffangen eines Permeats und eines Retentats, die aus der ersten Membran hervorgegangen sind;
- den Durchgang des aus der ersten Membran hervorgegangenen Permeats durch eine zweite Membran;
das Auffangen eines Permeats und eines Retentats, die aus der zweiten Membran hervorgegangen sind, wobei der gereinigte Strom aus dem aus der zweiten Membran hervorgegangenen Permeat besteht.

2. Verfahren nach Anspruch 1, **dadurch gekennzeichnet, dass** der Ausgangsstrom mit einem Verfahren zubereitet wird, das einen Durchgang durch ein Adsorptionsharz umfasst.

3. Verfahren nach Anspruch 1 oder 2, bei dem der Ausgangsstrom mindestens 55 Massen-%, vorzugsweise mindestens 60 Massen-%, Wasserstoffperoxid enthält.

4. Verfahren nach einem der Ansprüche 1 bis 3, wobei der Stabilisator aus den Phosphat- oder Pyrophosphatsalzen, den Zinnsalzen, den phosphororganischen Verbindungen und insbesondere den Phosphonaten, den Carbonsäuren, den Boraten, den Nitraten und den Kombinationen davon ausgewählt ist, wobei der Stabilisator vorzugsweise eine Mischung aus Natriumpyrophosphat und Natriumstannat ist.

5. Verfahren nach einem der Ansprüche 1 bis 4, wobei die Reinigung durch Umkehrosmose umfasst:
- den Durchgang des Ausgangsstroms durch eine einzige Membran;
- das Auffangen eines Permeats und eines Retentats, die aus der Membran hervorgegangen sind, wobei der gereinigte Strom aus dem Permeat besteht.

6. Verfahren nach einem der Ansprüche 1 bis 5, wobei die Reinigung durch Umkehrosmose an einer Membran vom Typ Polyamid, Polypiperazin, Polyacrylnitril oder Polysulfon und vorzugsweise an einer Polyamidmembran auf einem Polysulfonträger durchgeführt wird.

7. Verfahren nach einem der Ansprüche 1 bis 6, wobei der gereinigte Strom enthält:
- weniger als 100 mg/kg gesamter organischer Kohlenstoff;
- weniger als 5 mg/kg Phosphor;
- weniger als 0,04 mg/kg Eisen; und
- weniger als 0,1 mg/kg der Summe aus Chrom und Nickel.

8. Verfahren nach einem der Ansprüche 1 bis 7, wobei die Reinigung des Ausgangsstroms eine oder mehrere Membranen einsetzt, wobei die Membranen während einer Dauer größer oder gleich 1 Woche, vorzugsweise größer oder gleich 2 Wochen oder größer oder gleich 3 Wochen oder größer oder gleich 4 Wochen verwendet werden.

## Claims

1. Hydrogen peroxide purification process, comprising:
- supplying a starting stream containing hydrogen peroxide at a content above 50 wt%, as well as at least one stabilizer;
- a single step of purification of the starting stream, said single step consisting of purification by reverse osmosis;
- collecting a purified stream at the end of said single purification step,
in which purification by reverse osmosis comprises:
- passing the starting stream over a first membrane;
- collecting a permeate and a retentate from the first membrane;
- passing the permeate from the first membrane over a second membrane;
collecting a permeate and a retentate from the second membrane, the purified stream consisting of the permeate from the second membrane.

2. Process according to Claim 1, in which the starting stream is prepared by a process comprising passage over adsorption resin.

3. Process according to Claim 1 or 2, in which the starting stream contains at least 55 wt%, preferably at least 60 wt%, of hydrogen peroxide.

4. Process according to one of Claims 1 to 3, in which the stabilizer is selected from phosphate or pyrophosphate salts, tin salts, organophosphorus compounds and notably phosphonates, carboxylic acids, borates, nitrates and combinations of the latter, the stabilizer preferably being a mixture of sodium pyrophosphate and sodium stannate.

5. Process according to one of Claims 1 to 4, in which purification by reverse osmosis comprises:
- passing the starting stream over a single membrane;
- collecting a permeate and a retentate from the membrane, the purified stream consisting of the permeate.

6. Process according to one of Claims 1 to 5, in which purification by reverse osmosis is carried out on a membrane of the polyamide, polypiperazine, polyacrylonitrile or polysulfone type, and preferably on a polyamide membrane on a polysulfone support.

7. Process according to one of Claims 1 to 6, in which the purified stream contains:
- less than 100 mg/kg of total organic carbon;
- less than 5 mg/kg of phosphorus;
- less than 0.04 mg/kg of iron; and
- less than 0.1 mg/kg of the sum of chromium and nickel.

8. Process according to one of Claims 1 to 7, in which purification of the starting stream employs one or more membranes, said membranes being used for a time greater than or equal to 1 week, preferably greater than or equal to 2 weeks, or greater than or equal to 3 weeks, or greater than or equal to 4 weeks.
